# FASCICULE DE BREVET EUROPEEN

(11) **EP 2 753 756 B1**
(45) Date de publication et mention de la délivrance du brevet: **12.08.2020**
(21) Numéro de dépôt: 12767051.1
(22) Date de dépôt: 10.09.2012
(51) Int. Cl.: E01B 7/26, C23C 28/00, E01B 5/08, E01B 5/10, E01B 7/00, E01B 7/02, E01B 7/04, E04C 3/29, F16C 33/20, B21B 1/088

(54) **DISPOSITIF DE MANOEUVRE FERROVIAIRE SANS GRAISSAGE**
SCHMIERUNGSFREIE SCHIENENRANGIERVORRICHTUNG
LUBRICATION-FREE RAILWAY SHUNTING DEVICE

(30) Priorité: 08.09.2011 FR 1157986
(43) Date de publication de la demande: 16.07.2014
(73) Titulaire: Vossloh Cogifer (Société Anonyme), 92500 Rueil Malmaison (FR)
(72) Inventeur: BARRESI, Francesco, F-67000 Strasbourg (FR)
(74) Mandataire: Nuss, Laurent
(86) Numéro de dépôt international: PCT/FR2012/052013
(87) Numéro de publication internationale: WO 2013/034868

(56) Documents cités:
- EP-A1- 0 061 945
- EP-A2- 1 247 899
- WO-A1-2005/073465
- WO-A1-2011/059892
- FR-A1- 2 356 766
- US-A- 3 252 905
- US-A1- 2007 107 810

## Description

La présente invention se rapporte au domaine ferroviaire des appareils de voie et plus spécifiquement au domaine des surfaces de frottement acier sur acier de ces appareils et notamment au domaine des surfaces de frottement conservant durablement leurs propriétés lubrifiantes.

Actuellement, dans les systèmes ferroviaires tels que les dispositifs de manœuvre, aiguillages ou cœurs à pointe mobile, les dispositifs comportant un coulissement ou un déplacement entre deux pièces d'acier par un frottement de l'une contre l'autre présentent un problème d'usure rapide et de grippage au niveau des surfaces de frottement.

Pour remédier à ces problèmes, il est courant d'opérer un graissage des surfaces destinées à supporter le frottement des différentes pièces d'acier entre elles. Toutefois, un tel graissage présente certaines limites dont notamment d'avoir une durabilité restreinte. La graisse déposée sur les surfaces en contact se trouve rapidement éliminée lors de l'utilisation de l'appareil qui porte ces surfaces. Au-delà de sa simple élimination, la graisse présente également l'inconvénient de réagir ou de fixer les poussières et particules de son environnement de fonctionnement. Les propriétés lubrifiantes de la graisse se trouvent alors altérées au détriment de la faible résistance lors du glissement des surfaces l'une contre l'autre.

Une solution, alternative au graissage, couramment retenue pour limiter les efforts sur ces surfaces de frottement est la mise en place de rouleaux de déplacement des pièces qui portent les surfaces. Cette solution se traduit par une séparation des surfaces en contact grâce aux rouleaux qui déplacent les pièces, l'une par rapport à l'autre. Au-delà du coût conséquent pour l'équipement des surfaces de frottement avec un tel mécanisme, cette solution présente également l'inconvénient d'entraîner une modification notable de l'état géométrique de certains des éléments qui porte les surfaces de frottement.

La présente invention a pour but de pallier ces inconvénients en proposant une surface adaptée pour permettre, de façon durable, un frottement acier sur acier fonctionnant avec des contraintes de résistance aux mouvements qui présentent de faibles valeurs.

A cet effet, l'invention concerne une pièce de système ferroviaire selon la revendication 1 comprenant une surface de frottement contre une seconde surface, cette pièce comprenant au moins une structure en acier, caractérisée en ce que la surface externe de cette structure en acier est recouverte d'au moins une couche de polymères thermoplastiques lubrifiants.

L'invention a également pour objet une articulation selon la revendication 6.

L'invention concerne également un procédé de traitement d'une surface d'une structure en acier en vue d'une réduction de la résistance au frottement et de l'obtention d'une pièce selon l'invention, caractérisé en ce que le procédé de traitement comprend au moins les étapes décrites dans la revendication 7.

L'invention sera mieux comprise, grâce à la description ci-après, qui se rapporte à au moins un mode de réalisation préféré, donné à titre d'exemple non limitatif, et expliqué avec référence aux dessins schématiques annexés, dans lesquels :

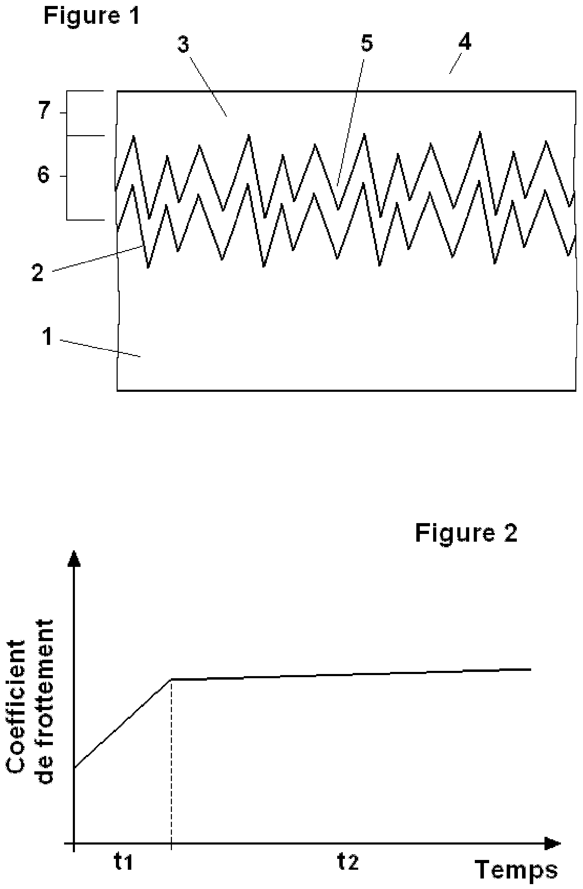

- la figure 1 est la représentation schématique d'un exemple de réalisation de l'épaisseur d'une pièce portant une surface de frottement selon l'invention,
- la figure 2 est une représentation schématique d'un diagramme de la résistance au frottement supportée par la surface de frottement au cours du temps.

L'invention concerne un revêtement de surface duplex permettant de faciliter principalement le frottement acier sur acier en cycle de mouvement de translation type séquentiel voire aléatoire entre deux antagonistes l'un fixe et l'autre mobile, sous charge et par tous les temps et dans des conditions atmosphériques sévères.

L'invention se rapporte à une pièce comprenant une surface 4 au niveau de laquelle un frottement est opéré. Cette surface 4 de frottement interagit ainsi avec la surface d'une seconde pièce. Cette interaction entre deux pièces peut être effectuée, par exemple, dans le cadre d'une articulation entre deux éléments au sein d'un dispositif ou entre deux éléments appartenant respectivement à des dispositifs différents. La première pièce comprend alors au moins une structure en acier 1, caractérisée en ce que la surface externe de cette structure en acier 1 est recouverte d'au moins une couche de polymères 3 thermoplastiques lubrifiants.

Dans le cadre de l'invention, la couche de polymères peut être portée par la surface externe d'une seule des pièces destinées à former l'articulation ou par chacune des pièces de l'articulation. De plus, l'invention peut être appliquée aussi bien à des surfaces d'articulations planes qu'à des surfaces circulaires ou courbées.

La couche de polymères 3 a pour objet, dans le cadre de l'invention, de jouer un rôle de lubrifiant en permettant de diminuer de façon significative la résistance due au frottement des surfaces 4 de chacune des pièces lors d'un déplacement de l'une sur l'autre. La couche 3 de thermoplastique permet de réduire le coefficient de frottement en obtenant une valeur de l'ordre de 0,2, préférentiellement de l'ordre de 0,15 et idéalement de 0,09.

Selon un mode de réalisation particulier et non limitatif de l'invention, au moins un des polymères thermoplastiques utilisés est un thermoplastique semi-cristallin thermostable. Selon un exemple particulier, le thermoplastique utilisé est un polyetherethercétone aussi appelé PEEK (PolyEther Ether Ketone).

Les propriétés de lubrification de la couche de polymères 3 thermoplastiques peuvent être altérées lorsque l'articulation fonctionne dans des conditions qui présentent des variations de températures, des intempéries diverses et/ou au sein d'un environnement qui facilite les dégradations, tel que, par exemple, du fait de la présence de poussières.

Selon un mode de réalisation préféré qui n'est pas limitatif de l'invention, la durabilité de la surface 4 de frottement et notamment la résistance de la surface 4 de frottement à la corrosion est améliorée par intégration d'une couche 2 d'acier amorphe disposée entre, d'une part, la structure en acier 1 et, d'autre part, la couche de polymères 3 thermoplastiques lubrifiant.

Selon un mode de réalisation particulier la couche 2 d'acier présente une composition intégrant au moins 70%, préférentiellement au moins 80% et idéalement au moins 90% de phase amorphe.

Une particularité de l'invention consiste également à améliorer la durabilité des propriétés lubrifiantes de la couche de polymères 3 en restreignant l'usure de la couche de polymères 3 grâce à une imbrication de la couche de polymères 3 et de la surface externe en acier permettant la combinaison des propriétés de chacune de ces couches, que cette surface soit réalisée directement par la structure 1 en acier de la pièce ou par une couche intermédiaire en acier amorphe 2.

Cette imbrication est effectuée grâce à la formation d'un relief sur la surface externe en acier. Les cavités de ce relief sont alors, au moins en partie, comblées par la couche de polymères 3 lubrifiant. La couche de polymères 3 qui recouvre ce relief, uniformise alors la surface de frottement de la pièce.

La couche de polymères 3 réalise ainsi une couche externe formée par une première épaisseur 6, en profondeur, qui remplit au moins partiellement les cavités du relief de la surface de la structure 1 en acier et/ou de la couche intermédiaire en acier amorphe 2, et par une seconde épaisseur 7, en surface, qui forme la surface de contact ou s'opère le frottement de la pièce.

La réalisation d'une surface de frottement selon l'invention fait ainsi intervenir plusieurs étapes d'un procédé de traitement permettant la formation d'une couche 3 de polymères thermoplastiques lubrifiant. Ces différentes étapes correspondent au moins à :
- une étape de lissage de la surface à traiter,
- une étape de nettoyage de la surface lissée,
- une étape d'imprégnation d'un polymère thermoplastique liquide sur la surface lissée-nettoyée,
- une étape de polymérisation par chauffage du thermoplastique déposé.

Selon un exemple de réalisation non limitatif de l'invention, le polymère thermoplastique est imprégné sur la surface de frottement par une projection mettant en jeu un pistolet à air comprimé.

Selon un exemple de réalisation, après polymérisation, la couche thermoplastique 3 présente une épaisseur supérieure à 10µm, préférentiellement supérieure à 15µm et idéalement supérieure à 20µm. La couche thermoplastique 3 présente alors une microdureté Koenig supérieure à 100, préférentiellement supérieure à 110 et idéalement supérieure à 120 ou une dureté Shore supérieure à 65D, préférentiellement supérieure à 75D et idéalement supérieure à 85D.

Selon un mode de réalisation préféré, la couche thermoplastique 3 ainsi déposée présente une résistance à une adhérence supérieure à 80 MPa, préférentiellement supérieure à 90 MPa et idéalement supérieure à 100 MPa. De même, la couche thermoplastique 3 autorise une résistance à des compressions supérieures à 100 MPa, préférentiellement supérieures à 110 MPa et idéalement supérieures à 118 MPa. La couche 3 de thermoplastique permet de réduire le coefficient de frottement en obtenant une valeur de l'ordre de 0,2, préférentiellement de l'ordre de 0,15 et idéalement de 0,09.

Selon le procédé de traitement d'une surface de l'invention, préalablement à cette mise en place d'une couche de thermoplastique polymérisé (3), le procédé comprend différentes étapes permettant une amélioration de la corrodabilité de la surface de frottement avec la formation d'une couche 2 d'acier amorphe sur laquelle est disposée la couche 3 de thermoplastique polymérisé. Ces différentes étapes correspondent, en outre, à :
- une étape de lissage de la surface acier,
- une étape de dégraissage de la surface acier,
- une étape de projection thermique d'au moins un substrat compris dans une liste intégrant notamment du Chrome (Cr), du Silicium (Si), du Manganèse (Mn), du Bore (B) et du Fer (Fe).

Suite à ces différentes étapes préalables, une couche 2 d'acier amorphe est formée au niveau de la surface de frottement. La résistance de la surface de frottement à la corrosion est alors proportionnelle au pourcentage d'acier amorphe formé sur la surface.

Selon un exemple de réalisation, la couche 2 formée présente une épaisseur supérieure à 100µm, préférentiellement supérieure à 200µm et idéalement supérieure à 250µm. La couche 2 d'acier amorphe présente alors une porosité inférieure à 2%, préférentiellement inférieure à 1,5% et idéalement inférieure à 1%. Cette couche 2 d'acier, grâce à la projection thermique d'un substrat, présente également comme caractéristique d'avoir un taux d'oxyde inférieur à 8%, préférentiellement inférieure à 6% et idéalement inférieure à 4%.

Selon un mode de réalisation préféré, la couche 2 d'acier amorphe ainsi formée présente une résistance à une adhérence supérieure à 35MPa, préférentiellement supérieure à 40 MPa et idéalement supérieure à 45MPa. De même, la couche 2 d'acier amorphe permet une résistance de la surface de frottement à des cisaillements supérieurs à 90 MPa, préférentiellement supérieurs à 110 MPa et idéalement supérieurs à 130 MPa.

Selon un mode de réalisation préféré mais non limitatif du procédé de réalisation d'une surface de l'invention, le procédé comprend plusieurs étapes permettant d'associer plus intimement la couche 3 de thermoplastique polymérisé et la surface supérieure d'acier qui porte cette couche 3 thermoplastique. La réalisation de cette association intime fait ainsi intervenir :
- une étape d'abrasion de la surface par projection de corindon jusqu'à obtention d'un état de surface au relief déterminé,
- une étape de nettoyage de la surface acier abrasée.

Ces étapes d'abrasion sont opérées préalablement à une étape de dépôt de la couche 3 de thermoplastique polymérisé et à une étape de formation d'une couche 2 d'acier amorphe par projection thermique d'un substrat.

Selon un exemple de réalisation, l'abrasion de la surface est effectuée par un corindon de type Cristalba F40-F60 ou tout autre type garantissant l'absence d'oxyde de fer. Ce corindon permet d'obtenir une rugosité dont le Ra est inférieur à 8µm, préférentiellement inférieur à 6µm et idéalement compris entre 4,5µm à 6µm. Après abrasion, la surface présente une microdureté Vickers supérieure à 900 HV 0,3, préférentiellement supérieure à 1000 HV 0,3 et idéalement supérieure à 1150 HV 0,3.

La réalisation d'un relief sur la surface externe en acier forme un ensemble de plusieurs cavités 5 réparties au niveau la surface d'acier. Lors du dépôt de la couche de polymères thermoplastiques et notamment lors de l'étape d'imprégnation du polymère liquide, ce polymère remplit et comble notamment les différentes cavités du relief de la surface d'acier.

La surface de frottement présente ainsi, dans son épaisseur, sous la couche de polymères thermoplastiques 3 proprement dite, une portion d'épaisseur 6 au niveau de laquelle la surface d'acier et le polymère thermoplastique sont imbriqués. Cette portion d'épaisseur 6 particulière de la surface de frottement participe notamment à l'amélioration de la durabilité de la surface de frottement et de la résistance de cette surface à l'usure. En effet, lors de la mise en œuvre de la surface de frottement, la couche formée par l'épaisseur 7 seule du thermoplastique 3 polymérisé présente une dureté et une résistance à l'usure insuffisante pour garantir une durabilité suffisamment importante. Toutefois, après une durée tl au cours de laquelle la surface de frottement supporte une usure progressive, cette couche externe de polymère thermoplastique seul 7 disparaît. La surface qui supporte le frottement est alors réalisée par la surface externe de l'épaisseur 6 où acier et polymère thermoplastique 3 sont imbriqués. La surface externe sur laquelle est opéré le frottement, est alors formée par une alternance de surface d'acier et de surface de polymère thermoplastique 3. Cette alternance permet ainsi une combinaison de la dureté de l'acier, éventuellement de l'acier amorphe, aux propriétés lubrifiantes du polymère thermoplastique 3. La surface de frottement permet ainsi une association combinée entre la dureté et la lubrification permettant de maintenir durablement dans le temps t2 les propriétés lubrifiantes du polymère thermoplastique 3. L'association de la couche 3 de polymère thermoplastique avec la couche 2 d'acier amorphe permet ainsi de réduire le coefficient de frottement en obtenant une valeur de l'ordre de 0,2, préférentiellement de l'ordre de 0,15 et idéalement de 0,09. La surface de frottement de l'invention permet ainsi d'assurer une durabilité de la faible résistance supportée par la surface de frottement.

## Revendications

1. Pièce de système ferroviaire comprenant une surface de frottement (4) contre une seconde surface, cette pièce comprenant au moins une structure (1, 2) en acier, la surface externe (4) de cette structure en acier étant recouverte d'au moins une couche (3) de polymères thermoplastiques lubrifiant, **caractérisée en ce que**, la structure (1) en acier n'étant pas réalisée en acier amorphe, la pièce comprend une couche (2) d'acier amorphe disposée entre, d'une part, la structure (1) en acier et, d'autre part, la couche (3) de polymères thermoplastiques lubrifiants.

2. Pièce selon la revendication 1, **caractérisée en ce que** la composition de la couche (2) d'acier comprend au moins 70% de phase amorphe.

3. Pièce selon une des revendications 1 ou 2, **caractérisée en ce que** la surface sur laquelle est disposée la couche (3) de polymères thermoplastiques, réalise un relief (5) au moins comblé en partie par la couche (3) de polymères thermoplastiques.

4. Pièce selon la revendication 3, **caractérisée en ce que** la couche (3) externe de polymères est formée par une première épaisseur (6) qui remplit les reliefs (5) de la surface externe et une seconde épaisseur (7) qui réalise la surface (4) de frottement de la pièce.

5. Pièce selon une des revendications 1 à 4, **caractérisée en ce qu'**au moins un polymère thermoplastique est un thermoplastique semi-cristallin thermostable.

6. Articulation pour un système ferroviaire formant un assemblage glissant **caractérisé en ce qu'**il comprend au moins une pièce portant une surface (4) de frottement selon une des revendications 1 à 5.

7. Procédé de traitement d'une surface d'une structure (1,2) en acier en vue d'une réduction de la résistance au frottement et de l'obtention d'une pièce selon une des revendications 1 à 5, **caractérisé en ce que** le procédé de traitement comprend au moins :
- une étape de lissage de la surface acier,
- une étape de dégraissage de la surface acier,
- une étape de projection thermique d'au moins un substrat compris dans une liste intégrant notamment du Chrome (Cr), du Silicium (Si), du Manganèse (Mn), du Bore (B) et du Fer (Fe),
complétées par la suite par :
- une étape de lissage de la surface à traiter,
- une étape de nettoyage de la surface lissée,
- une étape d'imprégnation d'un polymère (3) thermoplastique liquide sur la surface lissée-nettoyée,
- une étape de polymérisation par chauffage.

8. Procédé de traitement d'une surface acier selon la revendication 7, **caractérisé en ce que** le procédé comprend au moins
- une étape d'abrasion de la surface par projection de corindon jusqu'à obtention d'un état de surface au relief déterminé,
- une étape de nettoyage de la surface acier abrasée.

## Patentansprüche

1. Teil eines Eisenbahnsystems, das eine Reibungsfläche (4) gegenüber einer zweiten Fläche umfasst, wobei dieses Teil zumindest eine Struktur (1, 2) aus Stahl umfasst, wobei die Außenfläche (4) dieser Struktur aus Stahl mit zumindest einer Schicht (3) aus schmierfähigen thermoplastischen Polymeren überzogen ist, **dadurch gekennzeichnet, dass** die Struktur (1) aus Stahl nicht aus amorphem Stahl gefertigt ist, wobei das Teil eine Schicht (2) aus amorphem Stahl umfasst, die zwischen einerseits der Struktur (1) aus Stahl und andererseits der Schicht (3) aus schmierfähigen thermoplastischen Polymeren angeordnet ist.

2. Teil nach Anspruch 1, **dadurch gekennzeichnet, dass** die Zusammensetzung der Schicht (2) aus Stahl mindestens 70% amorpher Phase umfasst.

3. Teil nach einem der Ansprüche 1 oder 2, **dadurch gekennzeichnet, dass** die Fläche, auf welcher die Schicht (3) aus thermoplastischen Polymeren angeordnet ist, ein Relief (5) ausbildet, das zumindest teilweise durch die Schicht (3) aus thermoplastischen Polymeren ausgefüllt ist.

4. Teil nach Anspruch 3, **dadurch gekennzeichnet, dass** die äußere Schicht (3) aus Polymeren durch eine erste Dicke (6), welche die Reliefs (5) der Außenfläche ausfüllt, und eine zweite Dicke (7), welche die Reibungsfläche (4) des Teils ausbildet, ausgebildet ist.

5. Teil nach einem der Ansprüche 1 bis 4, **dadurch gekennzeichnet, dass** zumindest ein thermoplastisches Polymer ein thermostabiler, semikristalliner Thermoplast ist.

6. Gelenk für ein Eisenbahnsystem, das eine Gleitanordnung ausbildet, **dadurch gekennzeichnet, dass** es zumindest ein eine Reibungsfläche (4) tragendes Teil nach einem der Ansprüche 1 bis 5 umfasst.

7. Verfahren zur Behandlung einer Fläche einer Struktur (1, 2) aus Stahl zum Reduzieren des Reibungswiderstandes und zur Herstellung eines Teils nach einem der Ansprüche 1 bis 5, **dadurch gekennzeichnet, dass** das Behandlungsverfahren zumindest umfasst:
- einen Glättungsschritt der Stahlfläche,
- einen Entfettungsschritt der Stahlfläche,
- einen Schritt des thermischen Aufspritzens zumindest eines Substrats, das von einer Liste umfasst ist, die insbesondere Chrom (Cr), Silicium (Si), Mangan (Mn), Bohr (B) und Eisen (Fe) enthält,
nachträglich vervollständigt durch:
- einen Glättungsschritt der zu behandelnden Fläche,
- einen Reinigungsschritt der geglätteten Fläche,
- einen Schritt des Imprägnierens eines flüssigen, thermoplastischen Polymers (3) auf die geglättete, gereinigte Fläche,
- einen Polymerisationsschritt durch Erwärmung.

8. Verfahren zur Behandlung einer Stahlfläche nach Anspruch 7, **dadurch gekennzeichnet, dass** das Verfahren zumindest umfasst
- einen Schleifschritt der Fläche durch Aufspritzen von Korund, bis zum Erhalt einer Oberflächenbeschaffenheit mit einem bestimmten Relief,
- einen Reinigungsschritt der geschliffenen Stahlfläche.

## Claims

1. Part of a railway system comprising a surface (4) rubbing against a second surface, said part comprising at least one structure (1, 2) made of steel, the external surface (4) of said steel structure being covered by at least one layer of lubricating thermoplastic polymers (3), **characterised in that** the steel structure (1) is not made from amorphous steel, the part comprises a layer of amorphous steel (2) arranged between on the one hand the steel structure (1) and on the other hand the layer of lubricating thermoplastic polymers (3).

2. Part according to claim 1, **characterised in that** the composition of the steel layer (2) comprises at least 70% amorphous phase.

3. Part according to claim 1 or claim 2, **characterised in that** the surface on which the layer of thermoplastic polymers (3) is applied forms a relief (5) filled at least partly by the layer (3) of thermoplastic polymers.

4. Part according to claim 3, **characterised in that** the external layer (3) of polymers is formed by a first thickness (6) which fills the reliefs (5) of the external surface and a second thickness (7) which forms the rubbing surface (4) of the part.

5. Part according to any of claims 1 to 4, **characterised in that** at least one thermoplastic polymer is a semi-crystalline thermostable thermoplastic.

6. Articulation for a railway system forming a sliding assembly, **characterised in that** it comprises at least one part bearing a rubbing surface (4) according to any of claims 1 to 5.

7. Method for treating a surface of a steel structure (1, 2) in order to reduce the resistance to friction and to obtain a part according to any of claims 1 to 5, **characterised in that** the method of treatment comprises at least:
- a step of smoothing the steel surface,
- a step of degreasing the steel surface,
- a step of thermal spray coating at least one substrate selected from a list comprising in particular chromium (Cr), silicon (Si), manganese (Mn), boron (B) and iron (Fe),
completed subsequently by:
- a step of smoothing the surface to be treated,
- a step of cleaning the smoothed surface,
- a step of impregnating a liquid thermoplastic polymer (3) onto the smoothed-cleaned surface,
- a step of polymerisation by heating.

8. Method for treating a steel surface according to claim 7, **characterised in that** the method comprises at least
- a step of abrasion of the surface by spray coating corundum until a predetermined relief surface is obtained,
- a step of cleaning the abraded steel surface.
